(19) Europäisches Patentamt
European Patent Office
Office européen des brevets

(11) Publication number: **0 286 453 B1**

(12) **EUROPEAN PATENT SPECIFICATION**

(45) Date of publication of patent specification: **23.12.92**

(51) Int. Cl.⁵: **A01N 33/12**, C02F 1/50

(21) Application number: **88303234.4**

(22) Date of filing: **11.04.88**

The file contains technical information submitted after the application was filed and not included in this specification

(54) **Biocide.**

(30) Priority: **09.04.87 GB 8708501**

(43) Date of publication of application:
**12.10.88 Bulletin 88/41**

(45) Publication of the grant of the patent:
**23.12.92 Bulletin 92/52**

(84) Designated Contracting States:
**AT BE CH DE ES FR GR IT LI LU NL SE**

(56) References cited:
**EP-A- 0 059 978**
**WO-A-82/03817**
**FR-A- 2 143 449**
**EP-A- 0 259 525**
**WO-A-87/02221**
**US-A- 4 098 602**

(73) Proprietor: **ADVANCED CHEMICAL PRODUCTS LIMITED**
**50 St. Andrew Street**
**Hertford(GB)**

(72) Inventor: **Stainer, Philip John**
**The Green Withersfield Road**
**Gt. Wratting Haverhill Suffolk(GB)**

(74) Representative: **Ablewhite, Alan James et al**
**MARKS & CLERK 57/60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 286 453 B1

## Description

This invention relates to biocidal compositions for the treatment of water, and to methods for preventing microbial growth in water.

When water is used or retained in an open environment where it is subject to contamination by microorganisms, maintaining a suitable degree of sterility can be a problem. For example, recirculating water in cooling towers tends to become fouled by algal growths and bacterial slimes. Swimming pools become contaminated with algae and then by potentially dangerous bacteria. Similarly, industrial and agricultural lagoons, process water from various industrial applications such as paper milling, and other recycled water, need to be treated to control microbiological growths.

Various agents have been proposed, and are commonly used, for the control of algae. The most frequently used today are oxidative substances such as hydrogen peroxide, sodium hypo-chlorite, and quaternary ammonium compounds such as n-alkyl dimethylbenzylammonium chlorides and n-alkyl dimethyl ethylbenzylammonium chlorides and analogous compounds. These substances are used to prevent microbial growth: that is to say they are added to water which has already been cleaned and sterilized (e.g by filtration and chlorination), in order to maintain sterility. They are effective, typically at levels in the water of 10-100 ppm, although they do not necessarily provide a particularly wide spectrum of antimicrobial activity.

It is also well known that cations of transition metals such as copper and cobalt have algaecidal properties. Copper is particularly noted in this respect but has little, if any, activity against bacteria. One problem with the use of copper salts is that they tend to break down under neutral or slightly basic conditions to yield a precipitate of hydrated copper II hydroxide.

We have now discovered that a combination of transition metal cations, especially copper II cations, with a cationic polyquaternary ammonium biocidal compound or a quaternary ammonium biocide comprising one long chain alkyl group and three other groups selected from lower alkyl and aralkyl groups, has advantageous properties.

In particular, the combination of the quaternary compound and the metal ions in a concentrated aqueous system provides a stabilized metal ion solution which does not precipitate on dilution in the water to be treated. It may be theorized that the combination comprises some form of complex, since characteristic colour changes occur, e.g. the formation of an intense deep blue colour in dilute aqueous solutions of the copper II complex. The result is a distinct stabilization of the metal ions.

Thus, if copper sulphate (the blue pentahydrate) is dissolved in a concentrated aqueous solution of the quaternary ammonium compound, a clear common solution is formed. This solution can be added to the water, typically to give a quaternary compound level of 40 ppm and a copper level of 2.4 ppm without any precipitation of copper hydroxides or salts on dilution.

The quaternary compound is a halide, especially a chloride, of the type comprising polymers based on quaternised imines. The compounds of choice are poly[hydroxyethylene(dimethylimino)$\beta$'-hydroxypropyl-(dimethylimino)methylene-dichloride], hereinafter referred to as PHE, such as the product sold by ABM Chemicals Limited of Woodley, Stockport, Cheshire SK6 1PQ ; poly[2-hydroxyethylene(dimethylimino)-ethylene-(dimethylimino)methylene dichloride]; and poly[oxyethylene(dimethylimino)ethylene-(dimethylimino)ethylene dichloride].

Typically, the transition metal ion content in the mixture should be sufficient to give a level of about 0.5 to 3 ppm in the treated water when the quaternary compound is present in the water at about 30 to 50 ppm. The metal is advantageously copper, but may for example be zinc, chromium or tin.

The concentrated mixture for addition to water can contain upto 50 or 60% of the quaternary compound and an equivalent amount of copper or other transition metal ions.

We have found that the bactericidal activity of quaternary biocides in the presence of copper etc. can be enhanced by formulation with a biocide of the type comprising a carbon atom substituted by a halogen atom and a nitro group, e.g. cyclic

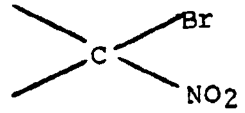

compounds and also 2-bromo-2-nitropropane-1,3-diol, supplied under the brand names Myacide (regd. Trade Mark) by Boots Pure Drug Co., Nottingham and Bronopol and Bronidox by Henkel & Cie. These biocides have activity against a wider range of bacteria than quaternaries, and especially are active against

pseudomonads. Myacide is usually used at a level of about 50-100 ppm.

Surprisingly, we have now found that if Myacide or the like is formulated with a quaternary such as PHE so that at a dilution in water of the quaternary of about 20-30 ppm, the Myacide etc is present at about 0.5 to 5 ppm, the formulation is active against pseudomonads as well, even though the Myacide is present at levels far below those normally considered necessary. The two substances are mutually compatible, forming a stable co-solution concentrate and provide a powerful biocidal action in all water environments, especially pools and cooling towers. We therefore provide a biocidal composition for the treatment of water comprising a cationic polyquaternary ammonium biocide which is a polymer based on a quaternised imine halide, together with a source of transition metal cations and a biocide of the type containing a gem. halonitromethylene group, selected from 2-bromo-2-nitro-propane-1,3-diol and 5-bromo-5-nitro-1,3-dioxane and also a method of controlling microorganisms in water, using such a composition. Preferably the ratio by weight of the first biocide to the second biocide is from 50:1 to 10:1.

Example 1

Microbiological Activity (1)

Three samples were compared:

Sample 1:

| % by weight | |
|---|---|
| PHE | 83.0 |
| 2-bromo-2-nitro-propan-1, 3-diol (BNP) | 2.5 |
| $CuS0_4$ | 7.0 |
| 4N HCl | 0.5 |
| Mains water | 7.0 |

Sample 2: As Sample 1, but omitting the BNP
Sample 3: As Sample 1, but omitting the copper salt
Sample 4: As Sample 1, but replacing the BNP by 5-bromo-5-nitro-1,3-dioxan.

Methods

1. Culture Preparation

A 24 hour Tryptone Soya Agar (TSA) sloped culture of Pseudomonas aeruginosa NCTC 6750 was washed off using sterile distilled water (SDW) and diluted in SDW to approx. $10^8$ organisms per ml.

2. Kill Tests

A range of dilutions of the test solutions were prepared in sterile standard World Health Organisation (WHO) Hard Water (see Appendix 1). At zero time P. aeruginosa inoculum was added to each dilution of each test solution to give approx. $10^6$ organisms per ml. A control of sterile standard WHO hard water was also included. The tests were stored at 22 °C and sampled at 0 hours (control only), 24 hours, 48 hours and 72 hours. The number of viable bacteria was estimated using a pour plate technique (0.1% peptone water as diluent and TSA as growth medium). The pour plates were incubated at 30 °C for 3 days, surviving colonies counted and the dilution giving a 99.99% reduction in the bacterial population for each contact time calculated. The test was carried out on two separate occasions.

Results

The number of surviving organisms for each test sample at each dilution and sampling time are shown in Tables 1 to 8.

TEST 1 - Preliminary range finding test

# TABLE 1

Sample 1

Number of organisms per ml surviving in

| Dilution | ppm Product | Time in hours | | | |
|---|---|---|---|---|---|
| | | 0 | 24 | 48 | 72 |
| Control | 0 | $4.5 \times 10^6$ | $5.9 \times 10^6$ | $3.0 \times 10^6$ | $1.9 \times 10^6$ |
| 1:5,000,000 | 0.2 | - | $4.6 \times 10^6$ | $5.6 \times 10^6$ | $5.7 \times 10^6$ |
| 1:2,000,000 | 0.5 | - | $4.7 \times 10^6$ | $6.9 \times 10^6$ | $9.8 \times 10^6$ |
| 1:1,000,000 | 1.0 | - | $6.8 \times 10^3$ | $2.6 \times 10^6$ | $1.8 \times 10^6$ |
| 1: 500,000 | 2.0 | - | $3.4 \times 10^3$ | $7.9 \times 10^3$ | $1.9 \times 10^5$ |
| 1: 200,000 | 5.0 | - | $2.2 \times 10^3$ | $3.9 \times 10^4$ | $1.2 \times 10^5$ |
| 1: 100,000 | 10.0 | - | $2.0 \times 10^1$ | <10 | $1.4 \times 10^2$ |

- count not required.

TABLE 2

Sample 2

Number of organisms per ml surviving in

| Dilution | ppm Product | Time in hours | | | |
|---|---|---|---|---|---|
| | | 0 | 24 | 48 | 72 |
| Control | 0 | $4.5 \times 10^6$ | $5.9 \times 10^6$ | $3.0 \times 10^6$ | $1.9 \times 10^6$ |
| 1:5,000,000 | 0.2 | - | $3.7 \times 10^6$ | $6.8 \times 10^6$ | $8.5 \times 10^6$ |
| 1:2,000,000 | 0.5 | - | $3.7 \times 10^6$ | $5.2 \times 10^6$ | $5.9 \times 10^6$ |
| 1:1,000,000 | 1.0 | - | $3.0 \times 10^4$ | $7.6 \times 10^6$ | $5.1 \times 10^6$ |
| 1: 500,000 | 2.0 | - | $2.2 \times 10^2$ | $3.2 \times 10^2$ | $8.2 \times 10^4$ |
| 1: 200,000 | 5.0 | - | $2.0 \times 10^2$ | $4.1 \times 10^4$ | $1.6 \times 10^5$ |
| 1: 100,000 | 10.0 | - | $1.0 \times 10^1$ | <10 | <10 |

- count not required.

TABLE 3

Sample 3

Number of organisms per ml surviving in

| Dilution | ppm Product | Time in hours | | | |
|---|---|---|---|---|---|
| | | 0 | 24 | 48 | 72 |
| Control | 0 | $4.5 \times 10^6$ | $5.9 \times 10^6$ | $3.0 \times 10^6$ | $1.9 \times 10^6$ |
| 1:5,000,000 | 0.2 | - | $3.4 \times 10^6$ | $3.9 \times 10^6$ | $5.3 \times 10^6$ |
| 1:2,000,000 | 0.5 | - | $2.9 \times 10^6$ | $3.7 \times 10^6$ | $5.6 \times 10^6$ |
| 1:1,000,000 | 1.0 | - | $4.4 \times 10^5$ | $4.7 \times 10^6$ | $5.8 \times 10^6$ |
| 1: 500,000 | 2.0 | - | $7.3 \times 10^4$ | $2.2 \times 10^4$ | $4.0 \times 10^4$ |
| 1: 200,000 | 5.0 | - | $3.9 \times 10^2$ | $1.9 \times 10^2$ | $4.3 \times 10^3$ |
| 1: 100,000 | 10.0 | - | $1.0 \times 10^1$ | <10 | $1.3 \times 10^2$ |

- count not required.

TABLE 4

Sample 4

Number of organisms per ml surviving in

| Dilution | ppm Product | Time in hours | | | |
|---|---|---|---|---|---|
| | | 0 | 24 | 48 | 72 |
| Control | 0 | $4.5 \times 10^6$ | $5.9 \times 10^6$ | $3.0 \times 10^6$ | $1.9 \times 10^6$ |
| 1:5,000,000 | 0.2 | - | $4.3 \times 10^6$ | $5.9 \times 10^6$ | $6.0 \times 10^6$ |
| 1:2,000,000 | 0.5 | - | $1.8 \times 10^6$ | $4.7 \times 10^6$ | $4.3 \times 10^6$ |
| 1:1,000,000 | 1.0 | - | $4.3 \times 10^4$ | $5.2 \times 10^6$ | $9.6 \times 10^6$ |
| 1: 500,000 | 2.0 | - | $8.0 \times 10^4$ | $9.3 \times 10^4$ | $5.9 \times 10^5$ |
| 1: 200,000 | 5.0 | - | $3.5 \times 10^3$ | $2.5 \times 10^5$ | $3.4 \times 10^4$ |
| 1: 100,000 | 10.0 | - | $3.0 \times 10^1$ | $9.6 \times 10^2$ | $5.3 \times 10^4$ |

\- count not required.

TEST 2

TABLE 5

Sample 1

Number of organisms per ml surviving in

| Dilution | ppm Product | Time in hours | | | |
|---|---|---|---|---|---|
| | | 0 | 24 | 48 | 72 |
| Control | 0 | $2.8 \times 10^6$ | $1.0 \times 10^6$ | $1.4 \times 10^6$ | $1.1 \times 10^7$ |
| 1:1,000,000 | 1.0 | - | $2.8 \times 10^5$ | $8.4 \times 10^6$ | $1.4 \times 10^7$ |
| 1: 500,000 | 2.0 | - | $3.9 \times 10^3$ | $5.6 \times 10^3$ | $2.4 \times 10^5$ |
| 1: 200,000 | 5.0 | - | $1.2 \times 10^3$ | $8.0 \times 10^2$ | $1.6 \times 10^3$ |
| 1: 100,000 | 10.0 | - | $2.7 \times 10^3$ | $3.8 \times 10^2$ | $1.7 \times 10^2$ |
| 1: 50,000 | 20.0 | - | $3.0 \times 10^1$ | $1.0 \times 10^1$ | $<10$ |
| 1: 20,000 | 50.0 | - | $9.0 \times 10^2$ | $<10$ | $<10$ |
| 1: 10,000 | 100.0 | - | $5.0 \times 10^2$ | $2.0 \times 10^1$ | $<10$ |

\- count not required.

TABLE 6

Number of organisms per ml surviving in Sample 2

| Dilution | ppm Product | Time in hours | | | |
|---|---|---|---|---|---|
| | | 0 | 24 | 48 | 72 |
| Control | 0 | $2.8 \times 10^6$ | $1.0 \times 10^6$ | $1.4 \times 10^6$ | $1.1 \times 10^7$ |
| 1:1,000,000 | 1.0 | - | $1.9 \times 10^6$ | $1.4 \times 10^7$ | $8.4 \times 10^6$ |
| 1: 500,000 | 2.0 | - | $2.7 \times 10^3$ | $9.0 \times 10^3$ | $3.4 \times 10^5$ |
| 1: 200,000 | 5.0 | - | $1.4 \times 10^3$ | $3.7 \times 10^3$ | $2.8 \times 10^5$ |
| 1: 100,000 | 10.0 | - | $1.3 \times 10^3$ | $1.8 \times 10^3$ | $1.5 \times 10^4$ |
| 1: 50,000 | 20.0 | - | <10 | $1.0 \times 10^1$ | $1.0 \times 10^2$ |
| 1: 20,000 | 50.0 | - | $2.5 \times 10^3$ | <10 | $1.6 \times 10^2$ |
| 1: 10,000 | 100.0 | - | $1.0 \times 10^1$ | <10 | <10 |

- count not required.

TABLE 7

Sample 3

Number of organisms per ml surviving in

| Dilution | ppm Product | Time in hours | | | |
|---|---|---|---|---|---|
| | | 0 | 24 | 48 | 72 |
| Control | 0 | $2.8 \times 10^6$ | $1.0 \times 10^6$ | $1.4 \times 10^6$ | $1.1 \times 10^7$ |
| 1:1,000,000 | 1.0 | - | $2.6 \times 10^6$ | $9.2 \times 10^6$ | $8.4 \times 10^6$ |
| 1: 500,000 | 2.0 | - | $6.0 \times 10^4$ | $3.0 \times 10^5$ | $2.3 \times 10^5$ |
| 1: 200,000 | 5.0 | - | $1.3 \times 10^3$ | $2.4 \times 10^3$ | $1.5 \times 10^4$ |
| 1: 100,000 | 10.0 | - | $1.8 \times 10^3$ | $6.0 \times 10^2$ | $1.5 \times 10^3$ |
| 1: 50,000 | 20.0 | - | $1.2 \times 10^3$ | $2.0 \times 10^1$ | <10 |
| 1: 20,000 | 50.0 | - | $6.0 \times 10^2$ | $3.0 \times 10^1$ | <10 |
| 1: 10,000 | 100.0 | - | $3.0 \times 10^1$ | <10 | <10 |

- count not required.

TABLE 8

Sample 4

Number of organisms per ml surviving in

| Dilution | ppm Product | Time in hours | | | |
|---|---|---|---|---|---|
| | | 0 | 24 | 48 | 72 |
| Control | 0 | $2.8 \times 10^6$ | $1.0 \times 10^6$ | $1.4 \times 10^6$ | $1.1 \times 10^7$ |
| 1:1,000,000 | 1.0 | - | $3.4 \times 10^6$ | $1.4 \times 10^7$ | $8.0 \times 10^6$ |
| 1: 500,000 | 2.0 | - | $1.9 \times 10^3$ | $4.0 \times 10^3$ | $6.0 \times 10^5$ |
| 1: 200,000 | 5.0 | - | $2.0 \times 10^1$ | $9.0 \times 10^1$ | $9.0 \times 10^2$ |
| 1: 100,000 | 10.0 | - | $1.0 \times 10^1$ | $2.0 \times 10^1$ | $2.3 \times 10^4$ |
| 1: 50,000 | 20.0 | - | $<10$ | $<10$ | $<10$ |
| 1: 20,000 | 50.0 | - | $<10$ | $<10$ | $<10$ |
| 1: 10,000 | 100.0 | - | $<10$ | $<10$ | $<10$ |

\- count not required.

Calculations

Linear regression was used to plot graphs of the log of number of colony forming units per ml. versus ppm of product. From these graphs the concentration of each product required, at each sampling time, to give 99.99% reduction in the bacterial population was determined. The values thus obtained for Test 1 and Test 2, and the corresponding dilution factors, are depicted in Tables 9 and 10.

TABLE 9

| TEST 1 | | | |
|---|---|---|---|
| Product | Contact time in hours | Product required to give 99.99% reduction in bacterial numbers | |
| | | pm | dilution |
| Sample 1 | 24<br>48<br>72 | 6.3<br>7.6<br>10.1 | 1:158,730<br>1:132,450<br>1: 99,009 |
| Sample 2 | 24<br>48<br>72 | 5.5<br>6.6<br>7.4 | 1:183,486<br>1:151,515<br>1:134,589 |
| Sample 3 | 24<br>48<br>72 | 6.3<br>approx 12.0<br>approx 15.5 | 1:159,235<br>1: 83,333<br>1: 64,516 |
| Sample 4 | 24<br>48<br>72 | 6.1<br>5.9<br>9.0 | 1:163,934<br>1:169,491<br>1:111,111 |

TABLE 10

| TEST 2 | | | |
|---|---|---|---|
| Product | Contact time in hours | Product required to give 99.99% reduction in bacterial numbers | |
| | | ppm | dilution |
| Sample 1 | 24<br>48<br>72 | 105.2<br>44.5<br>24.0 | 1: 9,505<br>1:22,471<br>1:41,666 |
| Sample 2 | 24<br>48<br>72 | 60.5<br>40.5<br>37.5 | 1:16,528<br>1:24,691<br>1:26,666 |
| Sample 3 | 24<br>48<br>72 | 74.5<br>46.0<br>28.0 | 1:13,422<br>1:21,739<br>1:35,714 |
| Sample 4 | 24<br>48<br>72 | 28.5<br>31 .5<br>28.5 | 1:35,087<br>1:31 ,746<br>1:35,087 |

## APPENDIX

### Sterile Standard World Health Organisation Hard Water

Solution a — 9.88g $MgCl_2.6H_2O$ in 100 ml distilled water. Filter sterilise.

Solution b — 21.6g $CaCl_2$(anhydrous) in 100 ml distilled water. Filter sterilise.

Add 3 ml of solution a, plus 3 ml of solution b to 2 litres of sterile distilled water.

## Example 2

### Zinc Replacing Copper II

| Component | % w/w |
|---|---|
| PHE | 83 |
| BNP | 2.5 |
| Zn $SO_4.7H_2O$ | 7.0 |
| 4N HCl | 0.5 |
| Mains water | 7.0 |

Example 3

Stannic (Tin IV) Replacing Copper II

| | |
|---|---|
| PHE | 83% w/w |
| BNP | 2.5% w/w |
| $SnCl_4$(ANHYD) 7.0% w/w | |
| 4N HCl | 0.5% w/w |
| Mains water | 7.0% 2/w |

Example 4

Stannous (Tin II) Replacing Cu II

When made

| | |
|---|---|
| PHE | 83% w/w |
| BNP | 2.5% w/w |
| $Sn_2Cl_2.2H_2O$ | 7.0% w/w |
| 4N.HCl | 0.5% w/w |
| Tap water | 7.0% w.w |

This product was cloudy when made, but on HEATING turned yellow and began to clear. There may have been some evaporation of the water.

Example 5

Buckman WSCP Replacing PHE

| | Component | Parts | Final % |
|---|---|---|---|
| * | WSCP | 664 | 83 |
| | Myacide | 20 | 2.5 |
| | $CuSO_4 5H_2 0$ | 56 | 7.0 |
| ** | 4NHCl | 12 | 1.5 |
| *** | Water | 48 | 6.0 |

* WSCP claimed to be 60% solids (from Buckman, UK: poly[hydroxy ethylene (dimethylimino) ethylene (dimethylimino)methylene dichloride])

** Extra HCl added to lower pH to blue crystal 5.5

*** Reduced $H_2 0$ to compensate for increased HCl

Note: Product does not go deep blue on dilution. EDTA/DTPA needed to give colouration - which is then deeper than with PHE.

## Example 6 Further microbiological activity data

### 1. Algistatic Trials

Minimum inhibitory concentrations (m.i.c.) were obtained against *Chlorella emersonii.*

| Sample | m.i.c. (ppm) |
|---|---|
| Sample 1 | 10 |
| Sample 3 | 10 |
| Sample 2 | 10 |
| Product of Example 2 | 15 |

### 2. Bactericidal Trials

a) Test Conditions

Biocide dilutions: prepared in hard water (342 ppm hardness)

Test organism: *Pseudomonas aeruginosa* NCTC 6750

Temperature: 22°C

Contact times: 24, 48 & 72 hours

Inactivator: 3% Tween 80 + 2% Soya Lecithin

Result: concentration giving a mean kill of 99.99%.

b) Results

| Sample | Bactericidal Figure (ppm) | | |
| --- | --- | --- | --- |
| | 24 hrs | 48 hrs | 72 hrs |
| Sample 1 | 30 | 20 | 20 |
| Sample 3 | 30 | 20 | 20 |
| Sample 2 | 30 | 20 | 20 |
| Product of Example 6 | 30 | 20 | 20 |

The following conclusions may be drawn.

1. Laboratory test suggest that the PHE/BNP/Cu blend will effectively control algal growth.

2. The PHE/BNP/Cu blend is a very effective bactericidal agent.

3. WSCP and PHE are readily interchangeable so far as the bactericidal performance is concerned.

Example 7

Microbiological Activity (2)

(A) Three formulations were studied:

| Raw Material | Formulation A | B | C |
|---|---|---|---|
| PHE | 50 | 50 | 50 |
| BNP | 1 | 2 | 3 |
| Citric Acid Monohydrate | 0.5 | 0.5 | 0.5 |
| Water | 100 | 100 | 100 |

All formulations were tested for bactericidal activity in the presence of hard water (200 ppm hardness) with a 4 day contact time. Bacteria isolated from a very heavily contaminated swimming pool, which was proving extremely difficult to control, were used as the inoculum. The formulations were tested at concentrations of 100 and 150 ppm. It proved desirable to add the citric acid in order to ensure stability. Two trials were carried out.

(B) Eight different formulations and a control were used:

| Formulation[a] | 50% PHE | Sample 2 from Ex. 1 | BNP |
|---|---|---|---|
| (1) (Control) | 0 | 0 | 0 |
| (2) | 50 | 0 | 0 |
| (3) | 50 | 50 | 0 |
| (4) | 100 | 50 | 0 |
| (5) | 0 | 0 | 2.5 |
| (6) | 0 | 0 | 5 |
| (7) | 50 | 0 | 2.5 |
| (8) | 50 | 50 | 2.5 |
| (9) | 100 | 50 | 5 |

[a] All values given in ppm.

Each formulation was made up in standard tap water (STW) and 20 ml. amounts of each were challenged with about $10^6$/ml <u>P. aeruginosa</u> NCTC 6750. Total viable counts (TVC's) were carried out in B.P. diluent and plated onto TSA at 0, 1, 2, 4 and 24 hours. Tests were stored at room temperature.

**RESULTS**

(A)

| Formulation | Concn. (ppm) | Trial 1 | Trial 2 |
|---|---|---|---|
| A | 150 | +++ | +++ |
| | 100 | ++++ | ++++ |
| B | 150 | + | + |
| | 100 | + | ++ |
| C | 150 | + | - |
| | 100 | + | + |

Key :
- \- : no growth of bacteria
- \+ : slight growth
- ++ : moderate growth
- +++ : heavy growth
- ++++ : very heavy growth

(B)

Bacterial Count (numbers/ml) in Treated Water Samples

| Formulation | Time (hours) 0 | 1 | 2 | 4 | 24 |
|---|---|---|---|---|---|
| (1) | $2.8 \times 10^6$ | $2.6 \times 10^6$ | $2.1 \times 10^6$ | $2.8 \times 10^6$ | $4.9 \times 10^5$ |
| (2) | - | $8.0 \times 10^1$ | < 10 | < 10 | < 10 |
| (3) | - | $1.1 \times 10^3$ | $1.0 \times 10^2$ | < 10 | < 10 |
| (4) | - | $1.4 \times 10^3$ | $6.0 \times 10^1$ | < 10 | < 10 |
| (5) | - | $2.2 \times 10^6$ | $1.4 \times 10^6$ | $1.2 \times 10^6$ | $2.9 \times 10^5$ |
| (6) | - | $2.2 \times 10^6$ | $1.2 \times 10^6$ | $1.4 \times 10^6$ | $3.3 \times 10^5$ |
| (7) | - | $9.0 \times 10^1$ | < 10 | < 10 | < 10 |
| (8) | - | $2.3 \times 10^1$ | $1.0 \times 10^1$ | < 10 | < 10 |
| (9) | - | $5.4 \times 10^2$ | $1.0 \times 10^1$ | < 10 | < 10 |

**Claims**

**1.** A biocidal composition for the treatment of water comprising a cationic polyquaternary ammonium biocide which is a polymer based on a quaternised imine halide, together with a source of transition metal cations and a biocide of the type containing a gem. halonitromethylene group, selected from 2-bromo-2-nitro-propane-1,3-diol and 5-bromo-5-nitro-1,3-dioxane.

2. A biocidal composition according to claim 1, in which the transition metal is copper II.

3. A biocidal composition according to claim 1 or 2 in which the quaternary compound is poly-[hydroxethylene (dimethylimino) β'-hydroxypropyl(dimethylimino)-methylene dichloride].

4. A biocidal composition accoridng to any of claims 1 to 3 in which the ratio by weight of the first biocide to the second biocide is from 50:1 to 10:1.

5. A method of controlling microorganisms in water by application thereto of a composition according to any of claims 1 to 4.

**Patentansprüche**

1. Biocide Zusammensetzung zur Behandlung von Wasser mit einem Gehalt an einem kationischen polymeren quaternären Ammonium-Biocid, bei dem es sich handelt um ein Polymer auf Basis eines quaternisierten Iminhalogenids, zusammen mit einer Quelle für Übergangsmetallkationen und einem Biocid vom eine gem-Halogennitromethylengruppe enthaltenden Typ, ausgewählt aus 2-Bromo-2-nitro-propan-1,3-diol und 5-Bromo-5-nitro-1,3-dioxan.

2. Biocide Zusammensetzung nach Anspruch 1, in der das Übergangsmetall Kupfer-II ist.

3. Biocide Zusammensetzung nach Anspruch 1 oder 2, in der die quaternäre Verbindung Poly-[hydroxyethylen(dimethylimino)-β'-hydroxypropyl(dimethylimino)methylendichlorid ist.

4. Biocide Zusammensetzung nach einem der Ansprüche 1 bis 3, in der das Gewichtsverhältnis zwischen dem ersten Biocid und dem zweiten Biocid 50:1 bis 10:1 beträgt.

5. Verfahren zur Bekämpfung von Mikroorganismen in Wasser, bei dem man eine Zusammensetzung nach einem der Ansprüche 1 bis 4 darauf einwirken läßt.

**Revendications**

1. Composition biocide pour le traitement de l'eau comprenant un biocide cationique de type ammonium polyquaternaire qui est un polymère basé sur un halogénure d'amine qui a été mis sous forme quaternaire ainsi qu'une source de cations de métaux de transition et un biocide du type contenant un groupent gem-halonitrométhylénique choisi parmi le 2-bromo-2-nitro-propane-1,3-diol et le 5-bromo-5-nitro-1,3-dioxane.

2. Composition biocide suivant la revendication 1, dans laquelle le métal de transition est le cuivre II.

3. Composition biocide suivant la revendication 1 ou 2, dans laquelle le composé quaternaire est le poly-[di-chlorure d'hydroxyéthylène(diméthylamino)β'-hydroxypropyl (diméthylamino)-méthylène].

4. Composition biocide suivant l'une quelconque des revendications 1 à 3, dans laquelle le rapport en poids du premier biocide sur le second biocide est compris entre 50:1 et 10:1.

5. Méthode pour le contrôle des microorganismes dans l'eau qui consiste à lui appliquer une composition suivant l'une quelconque des revendications 1 à 4.